# EUROPEAN PATENT APPLICATION

(11) **EP 1 129 621 A1**
(43) Date of publication of application: **05.09.2001**
(21) Application number: 00830147.5
(22) Date of filing: 29.02.2000
(51) Int. Cl.: A21C 11/00

(54) **Dough-rolling machine, in particular for the production of dough shapes for pizza**

(71) Applicant: Comas S.p.a., 36030 Pievebelvicino (Vicenza) (IT)
(72) Inventor: Visona, Renato, 36015 Schio (Vicenza) (IT)
(74) Representative: Lanzoni, Luciano

(57) **Abstract**

The present invention relates to a dough-rolling machine, in particular for the production of dough shapes from cake-shaped masses of dough for pizza, comprising a support structure (4) which has, vertically mounted on it, a shaft (7) connected at the bottom end (8) to a plurality of dough-rolling radial arms (10). This shaft (7) is mechanically associated with first actuating means (13) able to move it between a raised position, where the bottom end (8) is raised away from the mass of dough (3), and a lowered position, where the bottom end (8) compresses the mass of dough (3) of the support base (6). The shaft (7) is also mechanically associated with rotational means (12) which are able to cause rotation thereof about its central axis of symmetry (A) together with the radial arms (10). By so doing, when the shaft (7) is arranged in the lowered position, the radial arms (10) flatten out the mass of dough (3) on the support base (6).

## Description

The present invention relates to a dough-rolling machine, in particular for the production of dough shapes for pizza.

In particular, the machine in question is intended to be used, within the food-processing industry, in pizza manufacturing processes where, using an automatic rolling machine, it is necessary to obtain, from cake-shaped masses of dough, a bed of dough for a circular-shaped pizza which is raised at the edges.

At present numerous dough-rolling machines exist.

A first example of a dough-rolling machine of the known type is described in European Patent No. 463,221. According to the contents of this patent, the dough-rolling machine comprises a conveyor belt above which a punch-type mould with an alternating movement is arranged and below which there is a rotating disc which has, mounted on its upper surface, numerous small rollers arranged so as to form a spiral. When the punch-type mould is lowered, these rollers come into contact with the bottom side of the conveyor belt, thereby rolling out the dough.

In practice, this constructional solution has been unable to ensure rolling of the masses of dough in a sufficiently uniform manner and is therefore unable to achieve high standards of production in terms of quality.

A second example of a dough-rolling machine of the known type is described in European Patent No. 532,786. According to the contents of this patent, the dough-rolling machine comprises a vertical press comprising a plurality of concentric pressing rings which are mounted telescopically on top of one another and can be actuated in sequence independently of guide means. In so doing, as the individual concentric pressing devices are actuated, it is possible to compress a mass of dough, from the centre outwards, into a suitable receiving bed.

In practice this constructional solution has also been unable to ensure optimum rolling of the masses of dough and also has the disadvantage of being somewhat complex from an operational point of view, this having a negative effect on the costs for manufacture thereof.

The main object of the present invention is therefore that of overcoming the drawbacks associated with machines of the known type, by providing a dough-rolling machine, in particular for the production of dough shapes for pizza, which is able to ensure optimum rolling of the masses of dough.

A further object of the present invention is to provide a dough-rolling machine which is constructionally simple and operationally entirely reliable.

The technical features of the invention, in accordance with the abovementioned objects, may be clearly understood from the contents of the claims indicated below and the advantages thereof will emerge clearly from the detailed description which follows, with reference to the accompanying drawings which show a purely exemplary and non-limiting embodiment in which:
- Figure 1 shows a schematic side view of the dough-rolling machine according to the present invention with the shaft in the raised position;
- Figure 2 shows a schematic side view of the dough-rolling machine according to Figure 1 with the shaft in the lowered position;
- Figure 3 shows a schematic side view of the dough-rolling machine according to Figure 1 with the shaft in the lowered position and with thrusting means acting on radial arms;

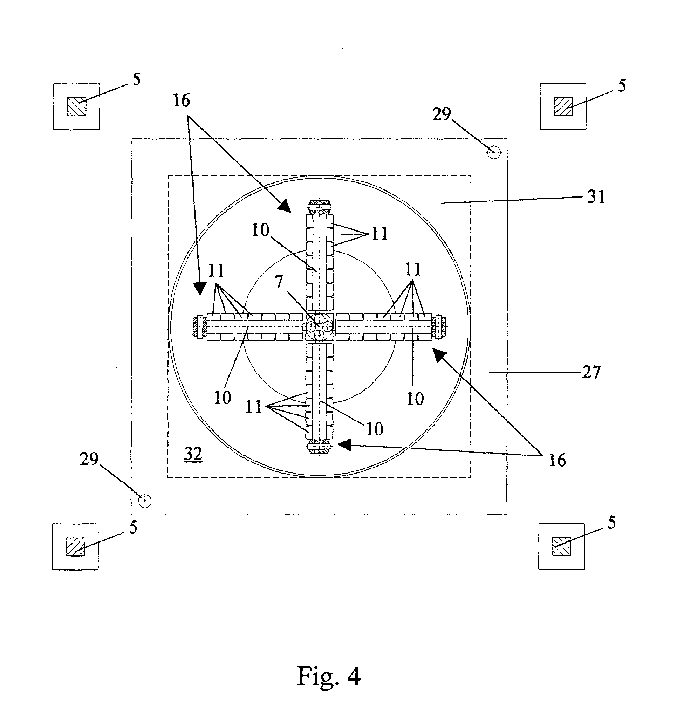

- Figure 4 shows a schematic plan view of a detail of the machine according to Fig. 1 with some parts removed so that others may be seen more clearly.

With reference to the figures in the accompanying drawings, 1 denotes in its entirety the dough-rolling machine in question.

Said machine advantageously may be operationally associated with a conveyor belt 2 which removes masses of dough 3 from a production unit (not shown in the accompanying figures) arranged upstream and conveys them through the dough-rolling machine 1 so as to transform them into the desired shape.

With reference to the figures in the accompanying drawings, the dough-rolling machine 1 comprises a support structure 4 formed by four load-bearing columns 5 which are arranged at the corners of a quadrilateral and which at the bottom rest on the ground in the vicinity of a support base 6 designed to receive the masses of dough 3.

The support structure 4 supports centrally a shaft 7 with a vertical axis A which is connected at its bottom end 8, by means of first hinges 9, to four dough-rolling radial arms arranged in the form of a cross. Each dough-rolling radial arm 10 has an elongated cylindrical shape with a longitudinal axis B and is provided with a plurality of flattening rollers 11 mounted idle coaxially with the radial arms 10.

Centrally the shaft 7 is mechanically connected to rotational means 12 which are designed to cause said shaft to rotate about its axis A. These means 12 advantageously consist of an electric motor mounted fixed on the support structure 4 and mechanically engaged with the shaft by means of mechanical transmission devices of the known type. Obviously, rotation of the shaft 7 consequently produces also rotation of the radial arms 10 which, as will be illustrated below, with their action cause rolling-out of the mass of dough 3 on the support base 6.

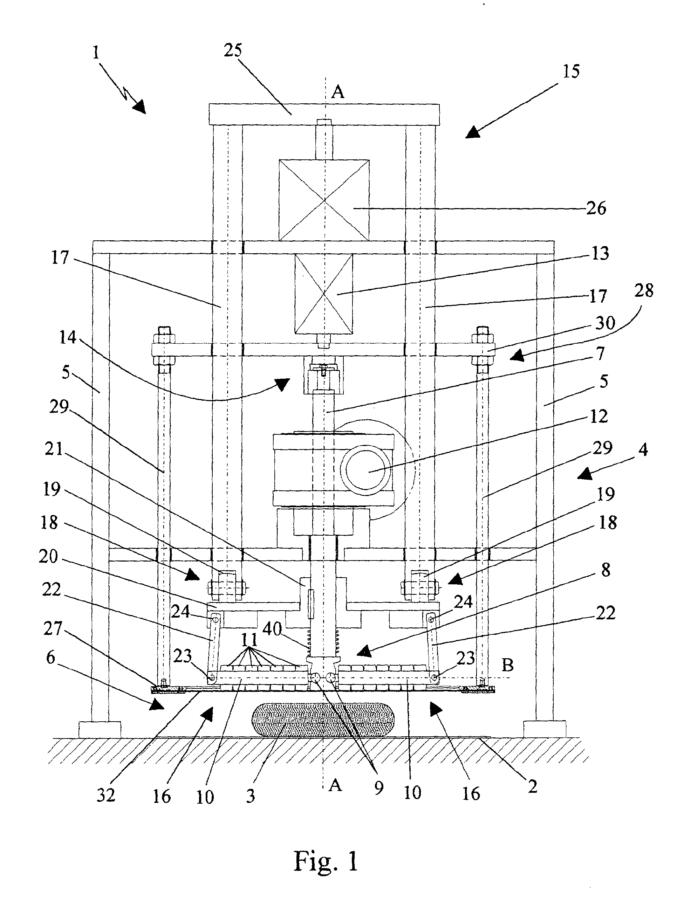

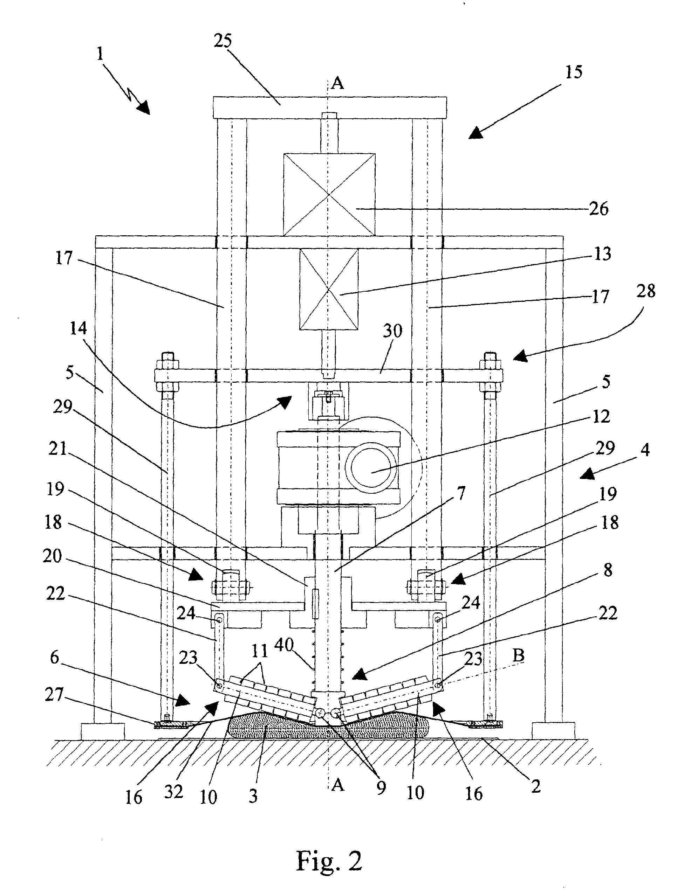

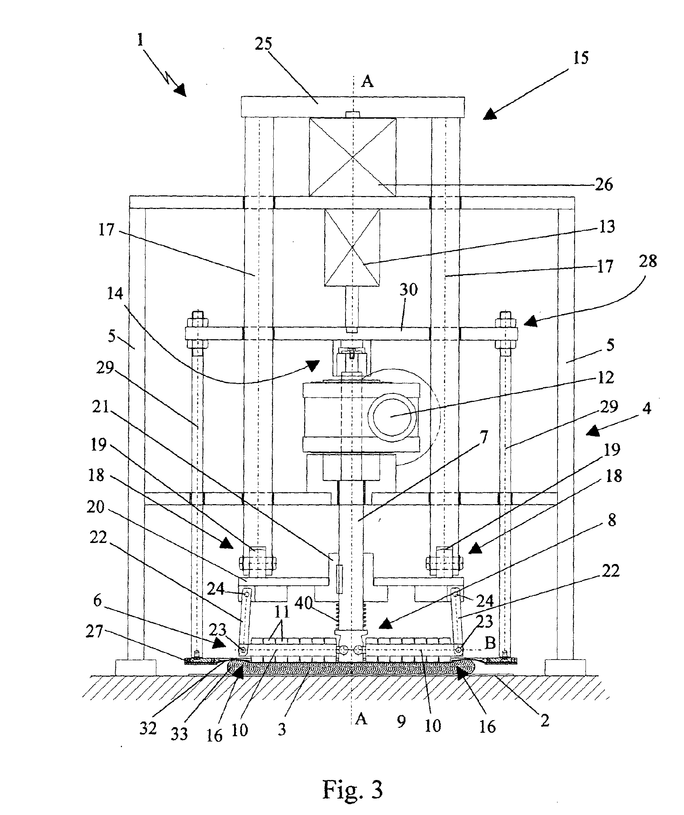

The dough-rolling machine 1 also comprises first actuating means 13 which are mechanically connected to the top end 14 of the shaft 7 so as to move it between a raised position (see Figure 1), where the bottom end 8 is raised away from the mass of dough 3, and a lowered position (see Figures 2 and 3) where the bottom end 8 compresses the mass of dough 3 on the support base 6.

Advantageously it is also envisaged using thrusting means 15 which push the free ends 16 of the radial arms 10 (i.e. the ends which are not connected to the shaft 7) downwards so as to compress the mass of dough 3 on the support base 6 when the shaft is in the lowered position.

In greater detail, in accordance with a preferred embodiment of the present invention, the thrusting means 15 comprise two columns 17 which have, mounted at their bottom ends 18, idle rollers 19 able to rotate in contact with a disc 20 mounted coaxially and slidably on the shaft 7 by means of restraining means 21.

The disc 20 is in turn connected to the free ends 16 of the radial arms 10 by means of transmission rods 22 which have, at their bottom and top ends, respectively, second hinges 23 and third hinges 24 (see Figures 1 to 3).

The two columns 17 are fixed at the top to a support plate 25 which is moved in a vertical direction by second actuating means 26 joined to the support structure 4.

The first and the second actuating means 13 and 26 may consist, for example, of pneumatic pistons.

Advantageously, resiliently yielding means 40 (for example consisting of a spring) are mounted between the restraining means 21, mounted coaxially on the shaft 7, and the bottom end 8 of the said shaft 7, said means being able to ensure that the free ends 16 of the radial arms 10 are kept raised when the thrusting means 15 are not yet acting on them.

In accordance with a further constructional feature of the present invention, the shaft 7 supports, underneath the radial arms 10, a mould 27 by means of transmission means 28 consisting, in the example of embodiment shown in the accompanying figures, of columns 29 and an upper plate 30.

In greater detail, the mould 27 has a circular-shaped central cavity 31 which is closed by means of a flexible meshwork 32 which is arranged between the radial arms 10 and the mass of dough 3 when the shaft 7 is in the lowered position. Functionally speaking, the dough-rolling machine 1 described hitherto from a mainly structural point of view operates in the manner described hereinbelow.

Initially, a conveyor belt 2 conveys a mass of dough 3 underneath the machine 1. At this point the machine 1 detects the presence of the mass of dough 3 and at first actuates only the downward movement of the shaft 7 (see Figure 2) from the raised position to the lowered position until said shaft is situated at a pre-set distance from the support surface 6.

In this position the radial arms 10 are slightly inclined towards the outside of the machine 1 since they are not yet opposed by the thrusting means 15.

For the sake of operational simplicity, it may be envisaged that the rotational means 12 always remains active so as to keep the shaft 7 constantly rotating.

It should be noted that the downward movement of the shaft 7 into the lowered position also causes the downward movement of the mould 27 which operationally limits expansion of the dough to its internal perimetral surface.

At this point the thrusting means also start to move downwards and gradually push the free ends 16 of the radial arms 10 into a horizontal position, causing complete flattening of the mass of dough 3.

A raised edge of dough 33 is formed on the outside of the radial arms 10 as far as the internal perimetral surface of the mould 27, as clearly shown in Figure 3. Advantageously, in order to obtain optimum rolling of dough, it is possible to perform a second rotation of the shaft (and therefore the radial arms 10) in a direction opposite to that of the first rotation.

## Claims

1. Dough-rolling machine, in particular for the production of dough shapes for pizza, characterized in that it comprises: a support structure (4) operationally arranged in the vicinity of a support base (6) designed to receive at least one mass of dough (3); a shaft (7) mounted substantially vertically on said support structure (4) and connected at its bottom end (8) by means of first hinges (9) to a plurality of dough-rolling radial arms (10), said shaft (7) being mechanically associated with first actuating means (13) designed to move it between a raised position, where said bottom end (8) is raised away from said mass of dough (3), and a lowered position, where said bottom end (8) compresses said mass of dough (3) on said support base (6), said shaft also being mechanically associated with rotational means (12) which are designed to cause rotation of said shaft about its central axis of symmetry (A) so as to roll out said mass of dough (3) on said support base (6) by means of consequent rotation of said radial arms (10) when said shaft (7) is arranged in the lowered position.

2. Machine according to Claim 1, characterized in that it comprises thrusting means (15) which operationally act on said radial arms (10) and are designed to cause lowering of the free ends (16) of said radial arms, compressing said mass of dough (3) on said support base (6).

3. Machine according to Claim 1, characterized in that it comprises at least one mould (27) supported by said shaft (7) underneath said radial arms (10) by means of transmission means (28).

4. Machine according to Claim 2, characterized in that said thrusting means (15) comprise at least two vertical columns (17) which have mounted, underneath them, rollers (19) which are able to rotate in contact with a disc (20) mounted coaxially and slidably on said shaft (7) by means of restraining means (21) and mechanically connected to the free ends (9) of said radial arms (10) by means of transmission rods (22), said vertical columns (17) being fixed at the top to a support plate (25) moved by second actuating means (26).

5. Machine according to Claim 4, characterized in that resiliently yielding means (40) are located between said restraining means (21) and the bottom end (8) of the shaft (7), said means being designed to allow raising of the free ends (16) of the radial arms (10) when said thrusting means (15) are not acting thereon.

6. Machine according to Claim 3, characterized in that said mould (27) has a circular-shaped central cavity (31) which is closed by a flexible meshwork (32) which is designed to be arranged between said radial arms (10) and said mass of dough (3) when said shaft (7) is arranged in the lowered position.

7. Machine according to Claim 2, characterized in that each dough-rolling radial arm (10) is provided with a plurality of flattening rollers (11) which are mounted idle thereon.

8. Method for rolling masses of dough, performed by the dough-rolling machine (1) according to Claim 1, characterized in that it comprises the following operational steps:
- arrangement of the mass of dough (3) on said support base (6);
- downward movement of said shaft (7) into said lowered position by means of actuation of said first actuating means (13);
- initial rotation of said shaft (7) by means of actuation of said rotational means (12) and consequent rotation of said radial arms (10) actively on said mass of dough (3).

9. Method for rolling masses of dough, according to Claim 8, characterized in that it comprises a step involving lowering of said thrusting means (15) onto said radial arms (10) so as to lower the free ends (9) of said radial arms (10), thereby compressing said mass of dough (3) on said support base (6).

10. Method for rolling masses of dough, according to Claim 8, characterized in that it comprises a second step involving rotation of said shaft (7) in the opposite direction with respect to that of said first rotational step.
